(19) Europäisches Patentamt

European Patent Office

Office européen des brevets

(11) **EP 2 459 420 B1**

## (12) FASCICULE DE BREVET EUROPEEN

(45) Date de publication et mention de la délivrance du brevet:
**10.07.2013 Bulletin 2013/28**

(21) Numéro de dépôt: **10734761.9**

(22) Date de dépôt: **27.07.2010**

(51) Int Cl.:
*B60T 7/04* *(2006.01)*     *B60T 13/58* *(2006.01)*
*B60T 13/74* *(2006.01)*     *B60W 10/18* *(2012.01)*

(86) Numéro de dépôt international:
**PCT/EP2010/060868**

(87) Numéro de publication internationale:
**WO 2011/012610 (03.02.2011 Gazette 2011/05)**

(54) **SYSTEME DE FREINAGE HYBRIDE POUR VEHICULE AUTOMOBILE A REPARTITION DE FREINAGE AMELIOREE**

HYBRIDBREMSSYSTEM FÜR EIN AUTO MIT VERBESSERTER BREMSKRAFTVERTEILUNG

HYBRID BRAKING SYSTEM FOR AN AUTOMOBILE WITH IMPROVED BRAKING DISTRIBUTION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **27.07.2009 FR 0955243**

(43) Date de publication de la demande:
**06.06.2012 Bulletin 2012/23**

(73) Titulaire: **Commissariat à l'Énergie Atomique et aux Énergies Alternatives
75015 Paris (FR)**

(72) Inventeurs:
- **DESBOIS-RENAUDIN, Matthieu**
  **F-38120 Saint Egrève (FR)**
- **CHATROUX, Daniel**
  **F-38470 Têche (FR)**

(74) Mandataire: **Ilgart, Jean-Christophe et al
BREVALEX
95 rue d'Amsterdam
75378 Paris Cedex 8 (FR)**

(56) Documents cités:
**WO-A-2008/107212**     **DE-A1-102005 030 223**
**US-A1- 2007 126 382**

# EP 2 459 420 B1

## Description

## DOMAINE TECHNIQUE ET ART ANTÉRIEUR

La présente invention se rapporte à un système de freinage électrique pour véhicule automobile de fonctionnement plus sûr et à un véhicule automobile comportant un tel système de freinage.

De manière traditionnelle, les véhicules automobiles comportent un moteur à combustion interne pour l'entraînement des roues motrices et un système de freinage hydraulique pour exercer un effort de freinage sur les roues du véhicule. Le système de freinage hydraulique comporte un maître-cylindre actionné par une pédale de frein directement commandée par le conducteur, et des freins situés au niveau des roues. Le maître-cylindre est connecté aux freins par un circuit hydraulique rempli de liquide de frein. Lorsque le conducteur appuie sur la pédale de frein, les pistons du maître-cylindre coulissent et provoquent une montée en pression du liquide de frein dans le circuit, actionnant les freins et provoquant le freinage. La puissance de freinage dépend de l'effort appliqué à la pédale. Le conducteur ressent une réaction au niveau de la pédale qui lui permet de gérer la puissance de freinage.

Depuis plusieurs années, se sont développés des véhicules dont l'énergie motrice n'est plus fossile mais électrique, les roues étant entraînées par un moteur électrique. On a alors pensé à utiliser les moteurs électriques en tant que convertisseurs pour convertir l'énergie cinétique du véhicule en énergie électrique et ainsi freiner le véhicule. L'énergie électrique ainsi générée est, soit stockée dans une batterie pour être utilisée plus tard, par exemple pour générer une force motrice, soit dissipée dans des résistances, soi utilisée directement par un auxiliaire électrique du véhicule (frein, chauffage...). Ce type de système de freinage s'appelle système de freinage par récupération. Cependant, à des fins de sécurité, le véhicule est toujours équipé d'un système de freinage hydraulique pour assurer une connexion directe entre la pédale et les freins en cas de défaillance du système de freinage par récupération. En outre, à certains moments, le freinage par récupération n'est pas nécessairement à privilégier. Par exemple, à faible vitesse, le freinage électromagnétique peut consommer de l'énergie. Ou, lorsque la batterie est complètement chargée, le frein électromagnétique n'est pas utilisable ou alors cette énergie doit être dissipée, ce qui requiert des résistances et des moyens pour réguler la température.

Ainsi les deux systèmes de freinage peuvent fonctionner simultanément et fournir chacun une partie de la puissance de freinage totale. Il est donc nécessaire de gérer la part de puissance de freinage apportée par chacun des systèmes de sorte que la puissance réellement fournie corresponde au freinage souhaité par le conducteur.

Le document US 2007/0126382 décrit un système de freinage comportant un sous-système de freinage par récupération et un sous-système de freinage hydraulique. Le sous-système comporte un maître-cylindre actionné par une pédale de frein. Lorsque le conducteur appuie sur la pédale de frein, la pression hydraulique générée est mesurée et est envoyée au calculateur en tant que consigne de freinage. Le calculateur sur la base de cette consigne envoie une commande au sous-système de freinage par récupération qui génère alors une force de freinage sur les roues. Le calculateur envoie une commande au sous-système de freinage hydraulique pour qu'il génère une pression hydraulique pour compléter la puissance freinage par récupération, sur la base de puissance de freinage prédéterminée en fonction de la consigne de freinage.

Ce système nécessite de nombreux capteurs, et utilise le calculateur pour générer des ordres sur la base de la pression hydraulique, qui est convertie en consigne. Ce système a un fonctionnement complexe et susceptible de connaître de nombreuses défaillances.

Le document WO 2008/107212 décrit un système de freinage hybride comportant un sous-système de freinage par récupération et un sous-système de freinage hydraulique, dans ce cas c'est le système ABS qui régule la pression de freinage générée par le sous-système hydraulique. Le système ABS est commandé en fonction de la consigne de freinage fournie par le conducteur.

Dans les systèmes de freinage hybride de l'état de la technique, le signal de consigne subit plusieurs transformations, ainsi que le signal électrique image du couple électromagnétique au niveau des freins. Ces multiples transformations peuvent être sources de défaillance et rendre le système de freinage inefficace. Or le système de freinage est un organe de sécurité dont la fiabilité doit être assurée.

C'est par conséquent un but de la présente invention d'offrir un système de freinage comportant un sous-système de freinage par récupération et un sous-système de freinage hydraulique ou électrique dont la répartition de la puissance de freinage générée par les deux sous-systèmes est gérée de manière simple et sûre.

## EXPOSÉ DE L'INVENTION

Le but précédemment énoncé est atteint par un système de freinage pour un véhicule automobile comportant un sous-système de freinage par récupération et un sous-système de freinage hydraulique ou électrique, le sous-système de freinage par récupération comportant une machine électrique apte à fonctionner en convertisseur d'énergie cinétique du véhicule en énergie électrique lors d'une phase de freinage, et des moyens pour réguler la puissance de freinage générée par le sous-système de freinage hydraulique ou électrique, lesdits moyens étant commandés par le courant généré par la machine électrique lors du freinage électromagnétique.

En d'autres termes, on réalise un couplage physique entre le sous-système de freinage électromagnétique et le freinage hydraulique ou électrique au moyen du courant généré par le sous-système de freinage électromagnétique, ce courant généré étant directement représentatif de la part de puissance générée par le freinage électromagnétique. L'utilisation du courant généré permet de ne pas utiliser de calculateur, ce qui évite des transformations du courant généré en une autre grandeur, ce qui réduit le risque de défaillance. Par ailleurs, cette régulation s'effectue en permanence tant qu'un courant est délivré par la machine électrique.

On utilise soit directement le courant généré pour commander les moyens de régulation de la puissance de freinage, soit une image de ce courant qui est un autre courant ou une tension.

Selon l'invention, on effectue une régulation du couplage entre le freinage électromagnétique et le freinage hydraulique ou électrique du véhicule par une méthode physique, ne nécessitant pas de calculateur. Cette régulation présente l'avantage important d'opérer en permanence, du simple fait des lois physiques. Le système de couplage selon l'invention permet de s'assurer en permanence d'une adaptation du système de freinage hydraulique ou électrique en fonction du freinage électromagnétique. Il s'affranchit de toute erreur de calcul d'un microcontrôleur. Les composants mis en jeu (transformateur, solénoïde) sont des composants d'une grande fiabilité, les modes de défaillance de l'ensemble du système sont donc peu nombreux. Par ailleurs, la présente invention donne plus de liberté dans la conception des systèmes.

Avantageusement les moyens de régulation transforment le courant généré ou l'image du courant généré en une force mécanique agissant, par exemple soit sur la pédale de frein qui commande la pression hydraulique dans le sous-système de freinage hydraulique, soit sur un piston du maître-cylindre, soit sur un limiteur de pression hydraulique.

La présente invention a alors principalement pour objet un système de freinage pour véhicule automobile comportant un sous-système de freinage électromagnétique et un sous-système de freinage électrique ou hydraulique, ledit sous-système de freinage électromagnétique comportant un convertisseur de l'énergie cinétique du véhicule en énergie électrique, ledit convertisseur délivrant un courant dit courant généré, un moyen pour stocker ou dissiper l'énergie électrique récupérée par le sous-système de freinage électromagnétique, caractérisé en ce que ledit système de freinage comporte également des moyens à actionnement électrique pour limiter la puissance de freinage du sous-système de freinage électrique ou hydraulique en fonction de la puissance de freinage du sous-système de freinage électromagnétique, lesdits moyens de limitation à actionnement électrique étant commandés électriquement par le courant généré ou par un signal image du courant généré.

Dans un mode de réalisation, le sous-système de freinage électrique ou hydraulique est actionné par une pédale de frein sur laquelle le conducteur exerce un effort de freinage, lesdits moyens de limitation appliquant un contre-effort sur la pédale de frein s'opposant à l'effort de freinage du conducteur sur la pédale de frein.

Dans un autre mode de réalisation, le sous-système de freinage hydraulique comporte un maître-cylindre, ledit maître-cylindre comportant au moins un piston, lesdits moyens de limitation appliquant un contre-effort sur ledit piston, dans un sens opposé au déplacement du piston dans un sens d'augmentation de la pression au sein du maître-cylindre.

Le maître-cylindre est par exemple un maître-cylindre tandem et le contre-effort est appliqué sur le piston secondaire. Avantageusement, le sous-système de freinage hydraulique comporte un circuit en parallèle.

Lesdits moyens de limitation peuvent comporter un actionneur formé par un solénoïde alimenté par le courant généré ou une image dudit courant généré, et un élément mobile dans le solénoïde ledit élément mobile étant apte à appliquer un contre-effort, ou être du type piézoélectrique, ou du type moteur électrique couplé à une transmission hélicoïdale.

Dans un autre mode de réalisation, le sous-système de freinage hydraulique comporte une source de pression hydraulique, les moyens de limitation comportant un dispositif limiteur de pression interposé entre la source de pression hydraulique et les freins et apte à interrompre la communication fluidique entre ladite source de pression et les freins, la pression de coupure du dispositif limiteur étant fixée par un actionneur commandé par le courant généré ou une image du courant généré.

Le dispositif limiteur de pression comporte, par exemple un corps dans lequel coulisse de manière étanche un piston délimitant deux chambres, l'une des chambres étant connectée à ladite source de pression et l'autre chambre étant connectée au freins, le piston comportant un passage dans le piston et un clapet, l'ouverture du clapet étant commandée par la position du piston, la position du piston étant commandée par la différence de pression entre lesdites deux chambres, la fermeture du clapet provoquant la limitation de la pression dans les freins, la position du piston étant commandée par l'actionneur. L'actionneur peut être un solénoïde alimenté par le courant généré ou une image dudit courant généré, et un élément mobile dans le solénoïde, la position de l'élément mobile définissant la pression de coupure, ou être du type piézoélectrique, ou être du type moteur électrique couplé à une transmission hélicoïdale.

Par exemple, les moyens de limitation de pression sont connectés directement aux bornes de la machine électrique.

Avantageusement, le système de freinage selon l'invention comporte en sortie de la machine électrique un transformateur de courant toroïdal ou d'un capteur LEM auquel sont connectés les moyens de limitation de pression.

Dans le cas où le sous-système de freinage électrique comporte au moins un organe électrique de freinage au niveau d'une roue pour actionner les freins et dans lequel lesdits moyens de limitation peuvent soit exercer une force s'opposant à celle appliquée par l'organe électrique de freinage, soit comporter une bobine dans laquelle circule le courant généré ou une image du courant généré, créant un champ magnétique qui s'oppose à celui créé par l'organe de freinage, soit comporter un circuit électrique apte à soustraire du courant de commande dudit organe électrique de freinage le courant généré ou l'image dudit courant généré.

Le système de freinage pour véhicule automobile selon la présente invention comporte avantageusement un interrupteur dans le circuit d'alimentation des moyens de limitation, ledit interrupteur étant ouvert lorsque le conducteur ne donne pas l'ordre de freiner et est fermé lorsque le conducteur donne l'ordre de freiner.

## BRÈVE DESCRIPTION DES DESSINS

La présente invention sera mieux comprise à l'aide de la description qui va suivre et des dessins en annexe sur lesquels :

- les figures 1A à 1C sont des représentations schématiques d'un premier mode de réalisation d'un système de freinage selon la présente invention, la régulation s'effectuant au niveau de la pédale de frein,
- la figure 1D est une variante de réalisation du système de la figure 1B,
- la figure 2 est une représentation schématique d'un deuxième mode de réalisation d'un système de freinage selon la présente invention, la régulation s'effectuant au niveau du maître-cylindre,
- la figure 3 est une représentation schématique d'un détail d'un troisième mode de réalisation d'un système de freinage selon la présente invention, la régulation étant obtenue au moyen d'un limiteur de pression,
- la figure 4 est une représentation schématique d'une variante du premier mode de réalisation du système de freinage selon l'invention.

## EXPOSÉ DÉTAILLÉ DE MODES DE RÉALISATION PARTICULIERS

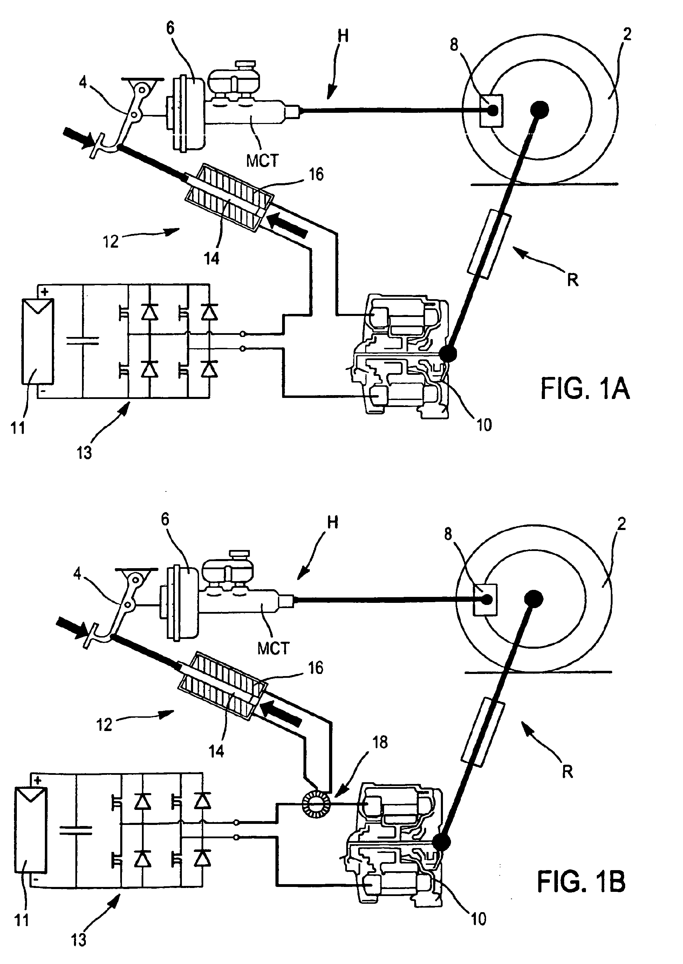

Sur la figure 1A, on peut voir un premier système de freinage pour véhicule automobile selon la présente invention.

Sur la figure 1A, seule une roue 2 du véhicule automobile est représentée, mais il est bien entendu que le système de freinage selon la présente invention peut s'appliquer à plus d'une roue, avantageusement à deux ou à quatre roues du véhicule automobile.

Le système de freinage selon la présente invention comporte un organe de commande formé, dans l'exemple représenté, par une pédale de frein 4 déplacée par le conducteur et qui traduit le niveau de freinage souhaité par le conducteur, un sous-système de freinage par récupération ou électromagnétique R et un sous-système de freinage hydraulique H, les sous-systèmes étant actionnés par la pédale de frein 4.

Dans l'exemple représenté, le sous-système de freinage hydraulique H comporte un maître cylindre tandem MCT actionné par la pédale de frein 4 via une tige de commande et un servomoteur d'assistance au freinage 6, le maître-cylindre tandem MCT étant connecté hydrauliquement aux freins 8 situés au niveau des roues 2. Les freins sont par exemple des freins à disque.

Le sous-système de freinage électromagnétique R comporte une machine électrique 10 apte à convertir l'énergie cinétique de la roue 2, plus particulièrement du disque de frein, qui lui est solidaire en rotation, en énergie électrique. Cette énergie électrique est avantageusement stockée dans une batterie. On peut également prévoir de la dissiper via des résistances ou qu'elle soit utilisée directement par un auxiliaire électrique.

Avantageusement, lors d'une phase motrice, la machine électrique 10 forme un moteur et sert à entrainer une ou des roues motrices en lieu et place d'un moteur à combustion interne. Une machine électrique 10 peut être prévue au niveau de chaque roue.

Lorsqu'un freinage électromagnétique a lieu, la machine électrique 10 génère un courant électrique dont la valeur est reliée à la valeur du couple de freinage appliqué par la force électromagnétique, ce courant sort du bobinage de la machine électrique vers une batterie 11, comme cela est représenté schématiquement, et/ou une supercapacité et/ou une ou des résistance(s) de dissipation. Le circuit de charge 13 de la batterie 11 est également représenté schématiquement.

La machine électrique 10 opère, lors du freinage, comme une source de puissance électrique, pour laquelle la tension est reliée à la vitesse de rotation (force contre-électromotrice) et le courant est relié au couple de freinage. Le courant électrique sortant de la machine électrique 10 pendant une phase de freinage électromagnétique sera appelé « courant généré ».

Dans le premier mode de réalisation de l'invention, le système de freinage comporte des moyens 12 pour limiter la pression hydraulique, destinés à appliquer un contre-effort sur la pédale de frein 2. Ces moyens 12 exercent une réaction supplémentaire s'ajoutant à la réaction générée par le circuit hydraulique de freinage lui-même.

Ces moyens de limitation 12 peuvent être formés par un actionneur électromagnétique. Dans l'exemple représenté, les moyens 12 comportent un solénoïde 16 dans lequel est disposé un élément mobile 14 apte à être déplacé lorsqu'un courant circule dans le solénoïde 16. L'élément mobile 14 est solidaire en mouvement de la pédale de frein 2 et est apte à appliquer un contre-effort à la pédale s'opposant à l'effort appliqué par le pied du conducteur. Le solénoïde 16 est directement connecté en série avec la machine électrique 10 et la batterie 11, il est donc directement traversé par le courant généré.

L'effort fourni par le solénoïde 16 repose sur le principe de la réluctance variable : lorsqu'un champ apparaît à l'intérieur du solénoïde, l'élément mobile situé à l'intérieur tend à se déplacer pour réduire le plus possible la résistance au champ magnétique créé (réluctance). Pour une position de l'élément mobile donnée, l'effort résultant est proportionnel au champ magnétique créé et donc au courant traversant le solénoïde. Le courant traversant le solénoïde étant directement l'image du courant sortant de la machine électrique, et donc du couple de freinage électromagnétique, l'effort exercé par l'élément mobile sur la pédale est fonction de la puissance de freinage du sous-système de freinage électromagnétique.

L'effort exercé par l'élément mobile s'oppose à l'effort du conducteur sur la pédale de frein 2, ce qui limite de fait la pression de liquide de frein dans les freins hydrauliques, cette limitation étant fonction de la puissance de freinage du sous-système de freinage électromagnétique.

Par conséquent, on obtient, de manière simple avec un minimum de composants supplémentaires, une répartition de la puissance de freinage entre le sous-système électromagnétique et le sous-système hydraulique basée directement sur la puissance de freinage délivrée par le sous-système électromagnétique. Cet exemple de réalisation présente l'avantage de limiter le nombre de transformations du signal formé par le courant généré. En effet, il est transformé en champ magnétique par le solénoïde, qui est transformé en force de réaction sur la pédale de frein. Les risques de défaillance sont donc réduits.

Sur la figure 1B, on peut voir un autre exemple de réalisation comportant un transformateur du courant généré 18 en série avec la machine électrique 10, le solénoïde 16 étant alimenté par le courant sortant du transformateur 18. Dans le cas d'une machine électrique à courant alternatif, on préférera un transformateur de courant toroïdal comme cela est représenté. Dans le cas d'une machine électrique à courant continu, on préférera un capteur à effet Hall.

Le courant sortant du transformateur de courant toroïdal 18 est un signal physique proportionnel au courant généré sortant de la machine électrique 10. Cet exemple de réalisation présente l'avantage de faciliter le transport du signal jusqu'aux moyens de limitation 12 situés à proximité de la pédale de frein. En effet, le signal image sortant du transformateur, i.e. un courant d'intensité réduite, peut être transporté par des fils de taille réduite par rapport à ceux nécessaires pour le courant généré.

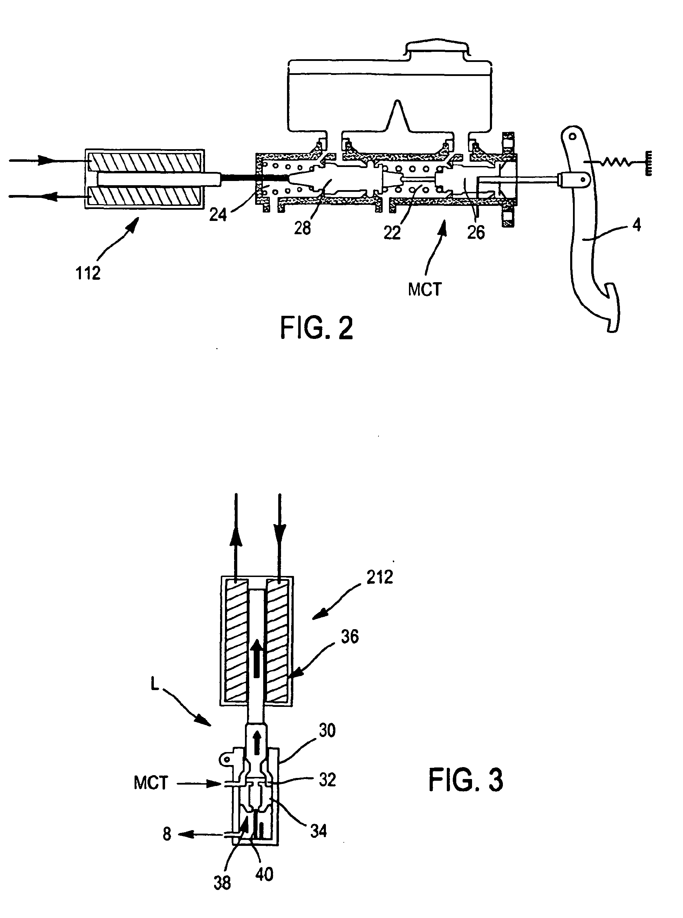

On peut également monter, comme cela est représenté sur la figure 2C, en série avec la machine électrique une diode Zener 20, les moyens de limitation 12 étant branchés aux bornes de la diode Zener 20.

Il est bien entendu que les moyens de limitation de la pression hydraulique 12 peuvent être autres que ceux déjà décrits. En effet, tout actionneur électrique apte à exercer un contre-effort sur la pédale de frein, et plus généralement sur tout élément du système de freinage hydraulique afin de limiter la pression hydraulique dans les freins, est utilisable. Par exemple, il peut s'agir d'un actionneur piézoélectrique commandé en tension. Ce type d'actionneur est particulièrement adapté dans le cas du système de la figure 2C ou dans le cas d'une machine à courant continu, avec un capteur à effet Hall.

L'actionneur peut également être formé par un moteur électrique associé à une transmission hélicoïdale, type roue et vis sans fin, la vis sans fin étant mécaniquement couplée à la pédale de frein 2, ou à une transmission à crémaillère, ou tout autre transmission apte à transformer un mouvement de rotation en contre-effort sur la pédale.

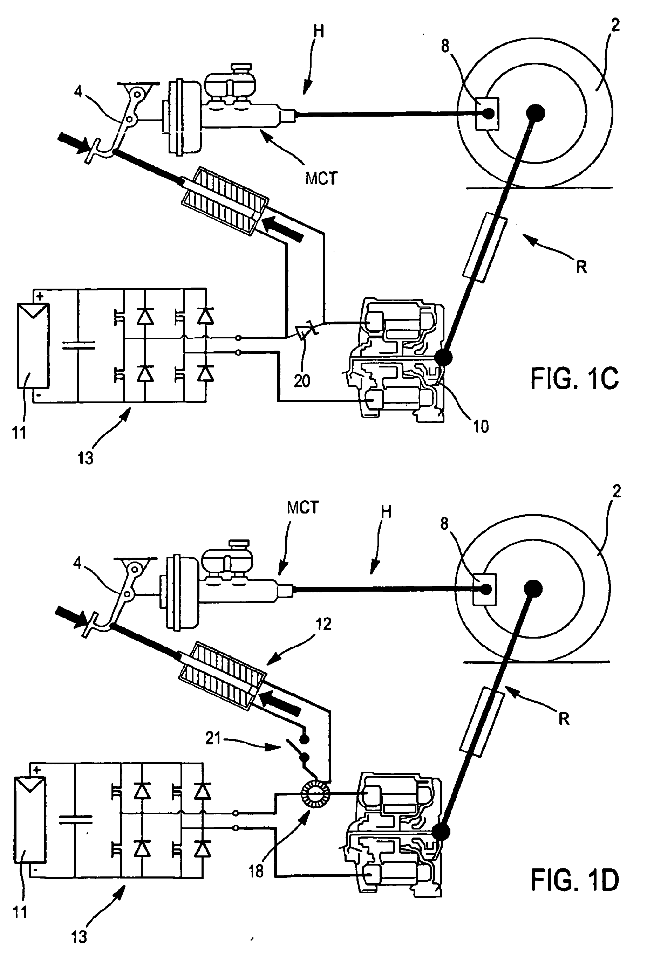

Sur la figure 1D, on peut voir une variante de réalisation du système de la figure 1B, dans laquelle on prévoit de rendre inactif le couplage lorsqu'un ordre d'accélérer est donné.

Le couplage, selon la présente invention, est en permanence actif, que la machine électrique exerce un couple de freinage ou un couple de traction. Dans ce dernier cas, le couplage ne joue aucun rôle. La limitation de l'effort de freinage dans le cas de la traction n'est pas gênante puisqu'en mode fonctionnement normal, il n'arrive jamais que l'on demande d'accélérer et de freiner en même temps. Le maître-cylindre n'envoie pas de liquide de frein sous pression dans les freins.

Néanmoins, on peut envisager un mode d'opération (par exemple dans le cas d'une erreur du conducteur) dans lequel la machine électrique serait en train de fournir un couple de traction, alors que le conducteur du véhicule demande un freinage de forte puissance, dans ce cas le freinage serait limité.

Afin de résoudre ce cas, on dispose un interrupteur 21 dans le circuit d'alimentation du solénoïde, plus généralement de l'actionneur de réaction, qui est ouvert lorsque la pédale de frein n'est pas actionnée, et qui se ferme lorsque la pédale de frein est actionnée. Par exemple, cet interrupteur est couplé au contacteur des feux de stop.

Il est bien entendu qu'un système de freinage dont la commande s'effectuerait par exemple au moyen d'un levier déplacé à la main ne sort pas du cadre de la présente invention. Dans ce cas, les moyens de limitation 12 s'appliqueraient.

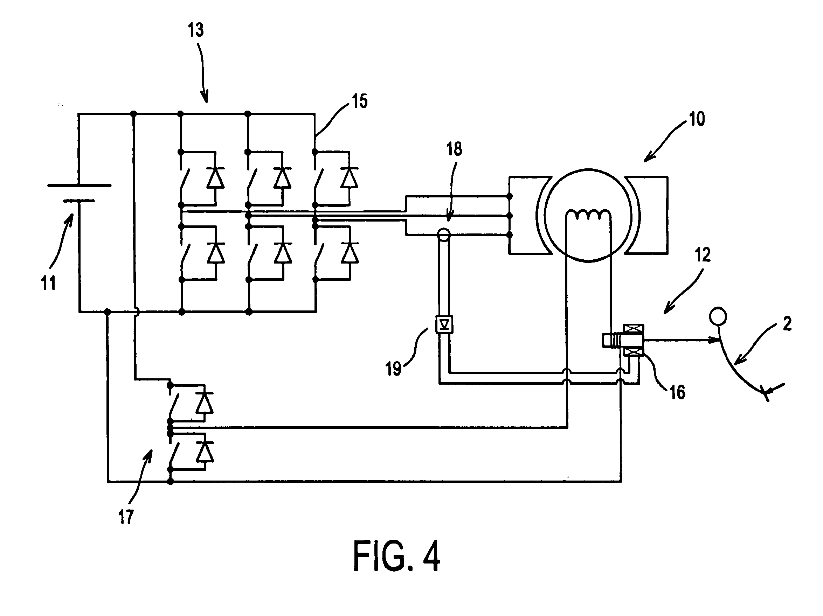

Une variante de réalisation peut être la suivante, celle-ci s'applique dans le cas où la machine électrique est un moteur synchrone à rotor bobiné. Cette variante est schématisée sur la figure 4. Le couple de freinage fourni par le moteur est, dans ce cas, proportionnel au produit des courants d'induit et d'excitation suivant l'équation :

$$C_{mot} = K_{mot} \cdot \Phi \cdot i_{induit} = K_{mot} \cdot L_{excitation} \cdot i_{excitation} \cdot i_{induit} = K' \cdot i_{excitation} \cdot i_{induit}$$

La force résultante du solénoïde est proportionnelle au courant d'alimentation du solénoïde et au flux généré par l'enroulement autour de son noyau. Ce flux étant lui-même proportionnel au courant traversant l'enroulement, on a :

$$F_{sol} = K_{sol} \cdot i_{excitation} \cdot i_{induit}$$

Des deux équations précédentes, on en déduit une relation de proportionnalité entre le couple moteur et la force exercée par le solénoïde. Ainsi, on obtient un couplage physique entre le freinage hydraulique et le freinage électromagnétique tel que le couple de freinage hydraulique est diminué du couple de freinage électromagnétique.

Dans l'exemple de la figure 4, l'enroulement du cœur du solénoïde est directement alimenté par le courant d'excitation du moteur. On pourra utiliser un capteur de courant électromagnétique (type LEM) et un amplificateur analogique pour récupérer une image de ce courant et limiter la consommation sur le circuit d'excitation.

Dans cette variante, le solénoïde 16 est alimenté par le courant sortant du transformateur 18 via un redresseur 19.Le circuit de charge 13 de la batterie 13 comporte un onduleur triphasé 15. Un hacheur d'excitation 17 est prévu aux bornes de la batterie pour alimenter la machine électrique.

Sur la figure 2, on peut voir un autre mode de réalisation d'un système de freinage selon la présente invention, dans lequel on prévoit des moyens de limitation de pression hydraulique 112 agissant directement sur un des pistons du maître-cylindre tandem.

Dans l'exemple représenté, le maître-cylindre tandem MCT est divisé en deux chambres de travail primaire et secondaire 22, 24 délimitées par des pistons primaire 26 et secondaire 28.

Le piston primaire est déplacé directement par la pédale de frein ou via un dispositif d'assistance et le piston secondaire est déplacé par le déplacement du piston primaire, plus exactement par la pression générée dans la chambre primaire 22 et par le ressort placé entre les deux pistons.

Chaque chambre de travail 22, 24 est reliée hydrauliquement à deux freins. Dans le cas d'un circuit en parallèle, une chambre alimente les deux roues avant et l'autre chambre alimente les deux roues arrière. Dans le cas d'un circuit en X, une chambre alimente la roue avant gauche et la roue arrière droite et l'autre chambre alimente la roue avant droite et la roue arrière gauche.

Dans l'exemple représenté, les moyens de limitation de la réaction hydraulique, par exemple le solénoïde, agissent sur le piston secondaire 28 et exerce un contre-effort sur celui-ci tendant à limiter la pression dans la chambre secondaire, et donc dans les freins qu'elle alimente.

Les moyens de limitation 12 sont commandés comme dans le mode de réalisation des figures 1A à 1D, soit directement par le courant généré, soit par l'image du courant généré, obtenue par exemple par un transformateur tel que décrit.

Ce mode de réalisation présente l'avantage d'assurer la répartition de la puissance de freinage sur deux freins seulement et non sur les quatre freins, comme c'est le cas lorsqu'on agit sur la pédale de frein.

Nous allons montrer, que, grâce à ce deuxième mode de réalisation de l'invention, en prenant par exemple un montage en parallèle, il est possible de moduler la pression de freinage pour les roues de l'essieu relié au circuit hydraulique secondaire, indépendamment de la pression dans le circuit primaire. Pour cela, on suppose que le circuit primaire est relié à l'essieu arrière, et le circuit secondaire est relié aux freins des roues avant. Seules les roues avant sont équipées de freins électromagnétiques, l'essieu arrière étant uniquement muni de freins hydrauliques.

De manière générale, le couple de freinage hydraulique $C_{FH}$ sur le disque de frein s'écrit :

$$C_{FH} = r \cdot F$$

$$F = f \cdot P_H \cdot S \qquad (I)$$

$$C_{FH} = \alpha \cdot P_H$$

Avec :

r la distance à laquelle la plaquette de frein applique la force F sur le disque de frein ;
$P_H$ la pression exercée par le système hydraulique ;
S la surface sur laquelle la pression $P_H$ s'applique pour appliquer la plaquette de frein contre le disque ;
f le coefficient de frottement du contact entre le disque/plaquette de frein ;
F la force avec laquelle s'applique la plaquette sur le disque.

La force F est directement proportionnelle au coefficient de frottement et à l'effort appliqué par le piston.

Le couple de freinage hydraulique exercé par le circuit primaire s'écrit donc, à partir de la relation (I),

$$C_{FH\_P} = r \cdot f \cdot P_P \cdot S$$

De manière générale, le bilan des forces s'appliquant sur le piston primaire et

$$P_P \cdot S_{Piston} + k \cdot \Delta x_P = F_{Tige} \qquad (II)$$

Avec : k la raideur du ressort de rappel dans la chambre primaire ;
$S_{Piston}$ la section de travail du piston primaire ;
$\Delta x_P$ la compression du ressort associé au piston primaire, et
$F_{Tige}$ la force appliquée par l'opérateur via la pédale de frein.

Dans le cas où on applique un effort sur le piston secondaire s'opposant à son déplacement dans un sens d'augmentation de la pression dans la chambre secondaire 24, le bilan des forces s'appliquant sur le piston primaire 26 reste inchangé. On en déduit que la pression sur le piston primaire est :

$$P_P = \frac{F_{Tige} - k \cdot \Delta x_P}{S_{Piston}}$$

L'effort de freinage sur l'essieu arrière reste donc inchangé.

En agissant sur le piston secondaire, il est donc possible de ne moduler la pression que dans les freins alimentés par le circuit secondaire.

Nous allons maintenant déterminer l'effort de freinage hydraulique généré par le circuit secondaire.

En reprenant la relation I, on peut écrire que le couple de freinage hydraulique du circuit secondaire $C_{FH\_s}$ est :

$$C_{FH\_S} = r \cdot f \cdot P_S \cdot S$$

Le bilan des forces (relation II) s'appliquant au piston 28 est modifié et devient, avec $F_{sol}$ : la force exercée par le solénoïde :

$$P_S \cdot S_{Piston} + k \cdot \Delta x_S + F_{sol} = F_{Tige}$$

$$P_S = \frac{F_{Tige} - k \cdot \Delta x_P}{S_{Piston}} - \frac{F_{sol}}{S_{Piston}}$$

Si l'on nomme $C_{standard}$ le couple de freinage dû au système hydraulique que l'on aurait sans couplage, on obtient alors l'expression suivante du couple de freinage pour l'essieu avant :

$$C_{FH\_S} = C_{Standard} - \frac{F_{sol}}{S_{Piston}} \qquad\qquad (III)$$

Comme expliqué précédemment, le courant traversant le solénoïde étant directement l'image du courant sortant de la machine électrique et donc du couple de freinage électromagnétique $C_{EM}$, $F_{sol}$ est proportionnelle à $I_{généré}$, ce qui permet d'écrire :

$$C_{FH\_S} = C_{Standard} - K \cdot C_{EM} \qquad\qquad (IV)$$

K est alors le gain de proportionnalité global. Ce gain est fonction de la conception du solénoïde (nombre de spires, géométrie du piston, présence d'un aimant dans le piston) et du mode choisi pour le couplage entre courant généré et courant de solénoïde (i.e. rapport de transformation du transformateur de courant toroïdal). Les composants pourront être choisis pour obtenir une valeur de K = 1, afin d'avoir en permanence un effort de freinage hydraulique sur l'essieu avant diminué de l'effort de freinage électromagnétique sur ce même essieu.
L'effort de freinage électromagnétique sur l'essieu avant s'écrit :

$$C_{EM} = \beta \cdot I_{induit}$$

On obtient finalement un effort total sur l'essieu avant de :

$$C_{FREIN} = C_{FH\_S} + C_{EM} = C_{Standard} - K \cdot C_{EM} + C_{EM}$$

Pour une valeur adaptée de K = 1, on retrouve :

$$C_{FREIN} = C_{Standard}$$

Par conséquent, quelles que soient les conditions de fonctionnement du système de freinage hydraulique et du système de freinage électromagnétique, le couple de freinage total reste alors constamment tel qu'optimisé pour le système de freinage hydraulique.
Sur la figure 3, on peut voir un autre mode de réalisation dans lequel la présente invention agit entre le maître-cylindre et les freins pour limiter la pression hydraulique délivrée dans les freins. Le maître -cylindre peut être remplacé par une source de pression autre, type pompe hydraulique.
Sur la figure 3, on peut voir un autre mode de réalisation de moyens 212 pour limiter la pression hydraulique dans les freins en fonction de la puissance de freinage électromagnétique. Les moyens 212 comportent un corps 30 dans lequel est réalisée une chambre 32 connectée d'une part à l'une des chambres du maître-cylindre et d'autre part aux freins. Un piston 34 est monté à coulissement étanche dans la chambre 32. Le piston 34 comporte un passage 36 obturable par un clapet 38. Par exemple, le clapet 38 est un clapet à bille, la bille étant rappelée contre le siège de clapet réalisé dans le piston par un ressort de rappel. En outre, une tige d'ouverture 40 est prévue pour maintenir la bille écartée du siège de clapet lorsque le piston 34 a une position basse au-delà d'un niveau donné.

Le piston 34 comporte deux faces sur lesquelles la pression dans le maître-cylindre s'applique. L'alimentation des freins est possible lorsque le clapet 38 est ouvert, i.e. lorsque le piston 34 a une position suffisamment basse.

Par ailleurs, selon l'invention on prévoit un actionneur 36 pour modifier la position au repos du piston 34 par rapport à la tige d'ouverture 40.

Par exemple, l'actionneur est formé par un solénoïde dans lequel peut coulisser un élément mobile, similaire à celui décrit en relation avec les figures 1A à 1D. Selon l'invention, ce solénoïde est alimenté par le courant généré de manière similaire au système de la figure 1A ou par une image du courant généré, de manière similaire aux systèmes des figures 1B et 1C.

L'élément mobile qui coulisse dans le solénoïde est solidaire du piston 34 coulissant dans le corps. Plus le courant généré ou son image circulant dans le solénoïde sera élevé, plus le piston 34 aura une position haute et plus la pression dans le maître-cylindre devra être élevée pour ouvrir le clapet et permettre une augmentation supplémentaire de la pression de liquide de frein dans le ou les freins.

De manière connue, l'équilibre du piston 34 est régi par l'équation suivante :

$$P2 = \frac{F2}{S2} + \frac{S1}{S2} \cdot P1 \qquad (V)$$

Avec : F2 la force appliquée par le solénoïde ;

P1 la pression dans le maître-cylindre ;

P2 la pression dans le frein ;

S1 la section sur laquelle s'applique P1 ;

S2 la section sur laquelle s'applique P2 ;

S12 la partie de la section de S2 sur laquelle la pression P1 ne s'applique pas.

Si on utilise une conception telle que les surfaces S1 et S2 soient égales, on obtient alors la nouvelle relation suivante :

$$P2 = P1 + \frac{F2}{S2}$$

Dans le dispositif de la figure 3 et comme déjà expliqué, la force exercée par le solénoïde a tendance à faire monter le piston 34 et est donc opposée à la force F2 telle que définie dans l'équation V. Si on appelle $F_{sol}$ cette nouvelle force, on obtient alors :

$$P2 = P1 - \frac{F_{sol}}{S2}$$

Avec ce nouveau système, P2 est égal à P1 tant que la force $F_{sol}$ est nulle. Si cette force devient non nulle, alors la pression de freinage est diminuée de façon proportionnelle à cette force. Par conséquent, pour un système de freinage hydraulique en parallèle, le couple total de freinage sur l'essieu avant est conservé en déterminant les éléments de transformation de tel sorte que le rapport K de la relation IV soit égal à 1.

Nous allons maintenant expliquer le fonctionnement du système de freinage muni du dispositif de limitation de la puissance de freinage selon la présente invention.

Lorsque le conducteur souhaite freiner, il appuie sur la pédale de frein, son ordre est détecté, une unité centrale envoie un ordre au système de freinage par récupération qui commande la machine électrique façon à ce qu'elle crée une force de freinage. La force de freinage est convertie en courant via la machine électrique, qui délivre le courant généré. Simultanément le maître-cylindre envoie du liquide de frein sous pression dans les freins.

Le courant généré ou son image circule dans le solénoïde provoquant un déplacement vers le haut du piston 34, le clapet 38 est fermé, la bille étant en appui sur le siège de clapet. Par conséquent, la communication entre le maître-cylindre MCT et les freins est interrompue, l'augmentation de la pression dans les freins est limitée. Cette limite est imposée par la position du piston 34 qui est directement dépendante de la valeur du courant généré ou de son image, qui est représentative de la puissance de freinage délivrée par le système de freinage par récupération. On a donc bien une répartition de la puissance de freinage entre le système de freinage par récupération et le système de freinage hydraulique, sur la base de la puissance de freinage du système de freinage par récupération.

Si l'effort exercé sur la pédale de frein augmente, la pression dans le maître-cylindre augmente, ce qui agit sur le piston 34. Simultanément le freinage électromagnétique augmente, ce qui augmente le courant généré, provoquant un déplacement du piston 34 en sens contraire. On atteint un nouvel état dans lequel la part de la puissance de freinage délivrée par le système de freinage hydraulique dans les freins a été adaptée.

Les moyens de limitation 212 selon la présente invention peuvent avantageusement être utilisés dans un circuit en parallèle, un seul dispositif limiteur étant interposé entre le maître-cylindre et les freins d'un même essieu.

On peut prévoir de tels moyens également pour chaque frein.

Les moyens de limitation 212 sont particulièrement avantageux car ils permettent de diminuer la taille des composants et donc leur coût. En effet, l'action directe du solénoïde sur le maître-cylindre peut exiger des efforts importants et donc des composants dimensionnés en conséquence.

Le système de freinage hydraulique tel que décrit jusqu'à présent comporte un maître-cylindre tandem, mais il est bien entendu qu'un système de freinage comportant un maître-cylindre avec une seule chambre alimentant les quatre freins ne sort pas du cadre de la présente invention.

Par ailleurs, il existe des systèmes de freinage dans lesquels le maître-cylindre sert de simulateur de sensation pédale, la montée en pression dans les freins étant obtenue au moyen de pompes hydrauliques. La commande des pompes hydrauliques est faite sur la base de la mesure du niveau de freinage requis par le conducteur en mesurant notamment la course des pistons. Dans ce cas, la présente invention s'applique également, les moyens de limitation s'appliquant sur les pistons simulant la sensation pédale. La réaction ainsi appliquée aux pistons de simulation modifiera la consigne envoyée aux pompes hydrauliques en fonction de la puissance du freinage électromagnétique.

Il est bien entendu que l'antiblocage des roues peut être géré par le système de freinage électromagnétique. On pourrait également envisager de désactiver le système de freinage électromagnétique lorsqu'un risque de blocage des roues est détecté, et ne faire gérer cette situation que par le système de freinage hydraulique.

En outre, le système de freinage hydraulique peut être remplacé par un système de freinage électrique, i.e. l'application des plaquettes de frein sur le disque ou des garnitures sur les tambours étant obtenu par exemple par un organe de freinage électrique comportant un moteur électrique actionnant un système roue et vis sans fin.

Dans le cas d'un système de freinage électrique, on peut prévoir d'alimenter un actionneur électrique, type solénoïde, par le courant généré ou par l'image du courant généré, qui exerce une force qui s'oppose à l'organe de freinage électrique. On peut également prévoir que le courant image du courant généré parcourt une bobine qui crée un champ magnétique opposé au champ magnétique créé par l'organe du freinage électrique. On peut également réaliser un circuit électrique permettant de soustraire au courant image du courant généré le courant alimentant l'actionneur électrique.

Le circuit de freinage en parallèle est particulièrement avantageux pour le système de freinage selon la présente invention, notamment dans le cas où l'on agit sur le piston secondaire du maître-cylindre tandem. Dans le cadre de la présente invention, un tel système de freinage offre une sécurité suffisante, même en cas de défaillance du circuit primaire ou secondaire. En effet, en cas de défaillance du circuit hydraulique de freinage sur l'essieu avant, il reste toute la puissance de freinage hydraulique du circuit arrière, associée à la puissance de freinage électromagnétique. Cette dernière correspond en général à la puissance de traction maximale pour un véhicule électrique.

Nous allons maintenant déterminer, à titre d'exemple uniquement, le dimensionnement d'un système de freinage selon la présente invention.

Nous considérons un système de freinage ayant les caractéristiques suivantes :

- amplification au niveau de la pédale : $k_1 = 4$ ;
- amplification au niveau du système hydraulique : $k_2 = 10$ ;
- coefficient de frottement des garnitures de frein : $f = 0.4$ ;
- rayon moyen des disques : $r = 190$ mm.

Nous faisons l'hypothèse qu'un effort de freinage du conducteur sur la pédale correspond à $F_{cde} = 100$ N. On obtient alors un effort de serrage des plaquettes de frein sur les disques de :

$$R_D = k_1 \cdot k_2 \cdot F_{cde} = 4000N$$

.

Etant donné qu'il y a quatre plaquettes de frein qui agissent sur les deux disques de l'essieu avant, on obtient un couple de freinage sur l'essieu avant de :

$$C_{frein} = 4 \cdot R_D \cdot f \cdot r = 1216Nm$$

Considérons maintenant le système de la présente invention du premier mode de réalisation représenté sur la figure 1, avec un solénoïde alimenté directement par le courant généré.

Le véhicule est équipé d'une machine électrique ayant les caractéristiques suivantes :

- machine à courant continu ;
- puissance nominale : 22 kW ;
- courant nominal de 54 A correspondant à un couple nominal de 60 Nm ;
- rapport de réduction entre machine électrique et roues : Kred = 4.

Afin de récupérer le maximum d'énergie et comme l'effort de freinage est supérieur à son couple maximal, la machine électrique fonctionne à son couple nominal de 60 Nm. Le couple de freinage équivalent sur l'essieu avant est alors de 240 Nm pour un courant de 54 A. Nous allons vérifier que le couple de freinage hydraulique a été diminué d'autant. Cette opération est réalisée par l'application d'un effort sur le piston de commande du circuit primaire de sens opposé à l'effort exercé par la tige de pilotage. Cet effort est :

$$F_{Sol} = \frac{240}{4 \cdot f \cdot r} \cdot \frac{1}{k_2} = 79N$$

Le solénoïde doit être capable de délivrer un effort de 79 N lorsque la machine électrique génère un courant généré de 54 A. L'entreprise Magnet-Schulz propose un solénoïde référencé « G RF Y 035 F20 B02» qui délivre 58N pour un courant de 0.68A. Si l'on utilise deux solénoïdes de ce type en série, on a besoin de 0.93 A pour atteindre 79N. Etant donné que le courant induit produit par la machine électrique est de 54 A et traverse le solénoïde, pour obtenir la même force magnétomotrice dans le circuit magnétique, il faudra diviser le nombre de spire du solénoïde par 58.

Dans le cas particulier d'une machine électrique à courant continu, il est communément admis que le couple de freinage électromagnétique CEM s'écrit en fonction du courant généré I et du flux présent dans la machine électrique, $\Phi$, selon l'équation suivante :

$$C_{EM} = k_{MCC} \cdot \Phi \cdot I$$

$k_{MCC}$ représente un facteur de proportionnalité constant, qui ne dépend que des propriétés physiques de la machine (dimensions, bobinage, etc.). On observe donc que pour un courant d'excitation constant, le couple est directement proportionnel au courant. Le raisonnement effectué plus haut s'adapte à toute la plage de fonctionnement de la machine électrique, tant que le flux est conservé constant.

Il est possible de connaître le flux dans toute machine électrique par l'insertion de bobinage de mesure dans la machine ou bien simplement par l'intermédiaire du courant d'excitation du rotor (pour une machine à courant continu par exemple). Cette image du flux pourra être utilisée pour exciter la partie « actionneur mécanique » du solénoïde et ainsi augmenter l'effort généré par l'ensemble.

On a bien réalisé un système de freinage hybride pour véhicule automobile permettant de réguler la puissance de freinage hydraulique ou électrique en fonction de la puissance de freinage électromagnétique de manière simple et sûre, en limitant les pertes d'information.

**Revendications**

1. Système de freinage pour véhicule automobile comportant un sous-système de freinage électromagnétique (R) et un sous-système de freinage électrique ou hydraulique (H), ledit sous-système de freinage électromagnétique (R) comportant un convertisseur (10) de l'énergie cinétique du véhicule en énergie électrique, ledit convertisseur (10) délivrant un courant dit courant généré, un moyen pour stocker (11) ou dissiper l'énergie électrique récupérée par le sous-système de freinage électromagnétique (R), **caractérisé en ce que** ledit système de freinage comporte également des moyens à actionnement électrique pour limiter (12, 112, 212) la puissance de freinage du sous-système de freinage électrique ou hydraulique (H) en fonction de la puissance de freinage du sous-système de freinage électromagnétique (R), lesdits moyens de limitation à actionnement électrique (12, 112, 212) étant commandés électriquement par le courant généré ou par un signal image du courant généré.

2. Système de freinage pour véhicule automobile selon la revendication 1, dans lequel le sous-système de freinage électrique ou hydraulique (H) est actionné par une pédale de frein (4) sur laquelle le conducteur exerce un effort de freinage, lesdits moyens de limitation (12) appliquant un contre-effort sur la pédale de frein (4) s'opposant à l'effort de freinage du conducteur sur la pédale de frein (4).

3. Système de freinage pour véhicule automobile selon la revendication 2, dans lequel le sous-système de freinage hydraulique (H) comporte un maître-cylindre (MCT), ledit maître-cylindre (MCT) comportant au moins un piston, lesdits moyens de limitation (112) appliquant un contre-effort sur ledit piston, dans un sens opposé au déplacement du piston dans un sens d'augmentation de la pression au sein du maître-cylindre (MCT).

4. Système de freinage pour véhicule automobile selon la revendication 3, dans lequel le maître-cylindre (MCT) est un maître-cylindre tandem et le contre-effort est appliqué sur le piston secondaire (24).

5. Système de freinage pour véhicule automobile selon la revendication 3 ou 4, dans lequel le sous-système de freinage hydraulique (H) comporte un circuit en parallèle.

6. Système de freinage pour véhicule automobile selon la revendication 1 ou 2, dans lequel lesdits moyens de limitation comportent un actionneur formé par un solénoïde alimenté par le courant généré ou une image dudit courant généré, et un élément mobile dans le solénoïde ledit élément mobile étant apte à appliquer un contre-effort.

7. Système de freinage pour véhicule automobile selon la revendication 6, dans lequel l'actionneur est du type piézoélectrique.

8. Système de freinage pour véhicule automobile selon la revendication 6, dans lequel l'actionneur est du type moteur électrique couplé à une transmission hélicoïdale.

9. Système de freinage pour véhicule automobile selon la revendication 1, dans lequel le sous-système de freinage hydraulique (H) comporte une source de pression hydraulique, les moyens de limitation (212) comportant un dispositif limiteur de pression interposé entre la source de pression hydraulique et les freins et apte à interrompre la communication fluidique entre ladite source de pression et les freins, la pression de coupure du dispositif limiteur étant fixée par un actionneur commandé par le courant généré ou une image du courant généré.

10. Système de freinage pour véhicule automobile selon la revendication précédente, dans lequel le dispositif limiteur de pression (212) comporte un corps (30) dans lequel coulisse de manière étanche une piston (34) délimitant deux chambres, l'une des chambres étant connectée à ladite source de pression et l'autre chambre étant connectée aux freins, le piston (34) comportant un passage dans le piston et un clapet (38), l'ouverture du clapet (38) étant commandée par la position du piston (34), la position du piston (34) étant commandée par la différence de pression entre lesdites deux chambres, la fermeture du clapet (38) provoquant la limitation de la pression dans les freins, la position du piston étant commandée par l'actionneur (36).

11. Système de freinage pour véhicule automobile selon la revendication 9 ou 10, dans lequel l'actionneur (36) est un solénoïde alimenté par le courant généré ou une image dudit courant généré, et un élément mobile dans le solénoïde, la position de l'élément mobile définissant la pression de coupure, ou l'actionneur est du type piézoélectrique, ou l'actionneur est du type moteur électrique couplé à une transmission hélicoïdale.

12. Système de freinage pour véhicule automobile selon l'une des revendications 1 à 11, dans lequel les moyens de limitation de pression (12, 112, 212) sont connectés directement aux bornes de la machine électrique.

13. Système de freinage pour véhicule automobile selon l'une des revendications 1 à 11, comportant en sortie de la machine électrique un transformateur de courant toroïdal (18) ou un capteur à effet Hall auquel sont connectés les moyens de limitation de pression (12, 112, 212).

14. Système de freinage pour véhicule automobile selon la revendication 1 ou 2, dans lequel le sous-système de freinage électrique comporte au moins un organe électrique de freinage au niveau d'une roue pour actionner les freins et dans lequel lesdits moyens de limitation exercent une force s'opposant à celle appliquée par l'organe électrique de freinage.

15. Système de freinage pour véhicule automobile selon la revendication 1 ou 2, dans lequel le sous-système de freinage électrique comporte au moins un organe électrique de freinage au niveau d'une roue pour actionner les freins et dans lequel lesdits moyens de limitation comportent une bobine dans laquelle circule le courant généré ou une image du courant généré, créant un champ magnétique qui s'oppose à celui créé par l'organe de freinage.

16. Système de freinage pour véhicule automobile selon la revendication 1 ou 2, dans lequel le sous-système de freinage électrique comporte au moins un organe électrique de freinage au niveau de chaque roue pour actionner les freins et dans lequel lesdits moyens de limitation comportent un circuit électrique apte à soustraire du courant de commande dudit organe électrique de freinage le courant généré ou l'image dudit courant généré.

17. Système de freinage pour véhicule automobile selon l'une des revendications 1 à 16, comportant un interrupteur (21) dans le circuit d'alimentation des moyens de limitation (12, 112, 212), ledit interrupteur (21) étant ouvert lorsque le conducteur ne donne pas l'ordre de freiner et est fermé lorsque le conducteur donne l'ordre de freiner.

**Patentansprüche**

1. Brems-System für ein Kraftfahrzeug, umfassend ein elektromagnetisches Brems-Subsystem (R) und ein elektrisches oder hydraulisches Brems-Subsystem (H), wobei das elektromagnetische Brems-Subsystem (R) einen Konverter (10) von kinetischer Energie des Fahrzeugs in elektrische Energie, wobei der Konverter (10) einen generierten Strom genannten Strom liefert, und ein Mittel zum Speichern (11) oder Ableiten der von dem elektromagnetischen Brems-Subsystem (R) zurückgewonnenen Energie umfasst,
dadurch gekennzeichnet, dass das Brems-System ferner elektrische Betätigungsmittel zum Begrenzen (12, 112, 212) der Bremskraft des elektrischen oder hydraulischen Brems-Subsystems (H) in Abhängigkeit von der Bremskraft des elektromagnetischen Brems-Susbsystems (R) umfasst, wobei die elektrischen Begrenzungs-Betätigungsmittel (12, 112, 212) elektrisch von dem generierten Strom oder von einem Bildsignal des generierten Stroms gesteuert werden.

2. Brems-System für ein Kraftfahrzeug nach Anspruch 1, wobei das elektrische oder hydraulische Brems-Subsystem (H) durch ein Bremspedal (4) betätigt wird, auf welches der Fahrer eine Bremskraft ausübt, wobei die Begrenzungs-Mittel (12) eine Gegenkraft auf das Bremspedal (4) einwirken, welche der Bremskraft des Fahrers auf das Bremspedal (4) entgegenwirkt.

3. Brems-System für ein Kraftfahrzeug nach Anspruch 2, wobei das hydraulische Brems-Subsystem (H) einen Hauptzylinder (MCT) umfasst, wobei der Hauptzylinder (MCT) wenigstens einen Kolben umfasst, wobei die Begrenzungs-Mittel (112) eine Gegenkraft auf den Kolben in einer Richtung, welche der Versetzung des Kolbens bei einer Erhöhung des Drucks innerhalb des Hauptzylinders (MCT) entgegengesetzt ist, einwirken.

4. Brems-System für ein Kraftfahrzeug nach Anspruch 3, wobei der Hauptzylinder (MCT) ein Tandem-Hauptzylinder ist, und die Gegenkraft auf den Sekundärkolben (24) eingewirkt wird.

5. Brems-System für ein Kraftfahrzeug nach Anspruch 3 oder 4, wobei das hydraulische Brems-Subsystem (H) ein parallele Schaltung umfasst.

6. Brems-System für ein Kraftfahrzeug nach Anspruch 1 oder 2, wobei die Begrenzungs-Mittel einen durch einen Solenoid gebildeten Aktuator, welcher von dem generierten Strom oder einem Bild des generierten Stroms gespeist wird, und ein mobiles Element in dem Solenoiden umfassen, welches mobile Element dazu eingerichtet ist, eine Gegenkraft auszuüben.

7. Brems-System für ein Kraftfahrzeug nach Anspruch 6, wobei der Aktuator vom piezoelektrischen Typ ist.

8. Brems-System für ein Kraftfahrzeug nach Anspruch 6, wobei der Aktuator vom Typ eines mit einem Schneckenradgetriebe verbundenen Elektromotors ist.

9. Brems-System für ein Kraftfahrzeug nach Anspruch 1, wobei das hydraulische Brems-Subsystem (H) eine hydraulische Druckquelle umfasst, wobei die Begrenzungs-Mittel (212) eine Druckbegrenzer-Vorrichtung umfassen, welche zwischen der hydraulischen Druckquelle und den Bremsen angeordnet und dazu eingerichtet ist, die Fluidverbindung zwischen der Druckquelle und den Bremsen zu unterbrechen, wobei der Abschaltdruck der Begrenzer-Vorrichtung durch einen von dem generierten Strom oder einem Bild des generierten Stroms gesteuerten Aktuator festgelegt wird.

10. Brems-System für ein Kraftfahrzeug nach dem vorhergehenden Anspruch, wobei die Druckbegrenzer-Vorrichtung (212) einen Körper (30) umfasst, in welchem ein Kolben (34) dicht gleitend zwei Kammern abgrenzt, wobei eine der Kammern mit der Druckquelle und die andere Kammer mit den Bremsen verbunden ist, wobei der Kolben (34) einen Durchgang durch den Kolben und ein Ventil (38) umfasst, wobei das Öffnen des Ventils (38) von der Position des Kolbens (34) gesteuert wird, wobei die Position des Kolbens (34) durch die Druckdifferenz zwischen den beiden Kammern gesteuert wird, wobei das Schließen des Ventils (38) das Begrenzen des Drucks in den Bremsen hervorruft, wobei die Position des Kolbens durch den Aktuator (36) gesteuert wird.

11. Brems-System für ein Kraftfahrzeug nach Anspruch 9 oder 10, wobei der Aktuator (36) ein Solenoid, welcher durch den generierten Strom oder ein Bild des generierten Stroms gespeist wird, und ein mobiles Element in dem Solenoid ist, wobei die Position des mobilen Elements den Abschaltdruck definiert, oder der Aktuator vom piezoelektrischen Typ ist, oder der Aktuator vom Typ eines mit einem Schneckenradgetriebe verbundenen Elektromotors ist.

12. Brems-System für ein Kraftfahrzeug nach einem der Ansprüche 1 bis 11, wobei die Druckbegrenzungs-Mittel (12, 112, 212) direkt mit den Anschlüssen der elektrischen Maschine verbunden sind.

13. Brems-System für ein Kraftfahrzeug nach einem der Ansprüche 1 bis 11, umfassend am Ausgang der elektrischen Maschine einen toroidalen Stromtransformator (18) oder einen Halleffekt-Sensor, welche mit den Druckbegrenzungsmitteln (12, 112, 212) verbunden sind.

14. Brems-System für ein Kraftfahrzeug nach Anspruch 1 oder 2, wobei das elektrische Brems-Subsystem wenigstens ein elektrisches Bremselement auf Höhe eines Rades zum Betätigen der Bremsen umfasst, und wobei die Begrenzungs-Mittel eine Kraft ausüben, welche derjenigen durch das elektrische Bremselement eingewirkten entgegenwirkt.

15. Brems-System für ein Kraftfahrzeug nach Anspruch 1 oder 2, wobei das elektrische Brems-Subsystem wenigstens ein elektrisches Bremselement auf Höhe eines Rades zum Betätigen der Bremsen umfasst, und wobei die Begrenzungs-Mittel eine Spule umfassen, in welcher der generierte Strom oder ein Bild des generierten Stroms fließt, wodurch ein Magnetfeld erzeugt wird, welches demjenigen durch das Bremselement erzeugten entgegenwirkt.

16. Brems-System für ein Kraftfahrzeug nach Anspruch 1 oder 2, wobei das elektrische Brems-Subsystem wenigstens ein elektrisches Bremselement auf Höhe eines Rades zum Betätigen der Bremsen umfasst, und wobei die Begrenzungs-Mittel einen elektrischen Schaltkreis umfassen, welcher dazu eingerichtet ist, von dem Steuerstrom des elektrischen Bremselements den generierten Strom oder das Bild des generierten Stroms zu subtrahieren.

17. Brems-System für ein Kraftfahrzeug nach einem der Ansprüche 1 bis 16, umfassend Schalter (21) in dem Versorgungs-Schaltkreis der Begrenzungs-Mittel (12, 112, 212), wobei der Schalter (21) geöffnet ist, wenn der Fahrer keine Bremsanweisung gibt, und geschlossen ist, wenn der Fahrer eine Bremsanweisung gibt.

**Claims**

1. Braking system for an automobile comprising an electromagnetic braking subsystem (R) and an electric or hydraulic subsystem (H), said electromagnetic subsystem (R) comprising a converter (10) to convert the kinetic energy of the vehicle into electrical energy, said converter (10) outputting a so-called generated current, a means of storing (11) or dissipating the electrical energy regenerated by the electromagnetic braking subsystem (R), **characterised in that** said braking system also comprises electrical actuation means to limit (12, 112, 212) the braking power of the electric or hydraulic braking subsystem (H) as a function of the braking power of the electromagnetic braking subsystem (R), said electrical actuation limitation means (12, 112, 212) being electrically controlled by the generated current or by an image signal of the generated current.

2. Braking system for an automobile according to claim 1, in which the electric or hydraulic braking subsystem (H) is actuated by a brake pedal (4) on which the driver applies a braking force, said limitation means (12) applying a force on the brake pedal (4) opposing the braking force applied by the driver on the brake pedal(4).

3. Braking system for an automobile according to claim 2, in which the hydraulic braking subsystem (H) comprises a master cylinder (MCT), said master cylinder (MCT) comprising at least one piston, said limitation means (112) applying an opposing force on said piston in a direction opposite to the displacement of the piston in a direction in which the pressure increases inside the master cylinder (MCT).

4. Braking system for an automobile according to claim 3, in which the master cylinder (MCT) is a tandem master cylinder and the opposing force is applied on the secondary piston (24).

5. Braking system for an automobile according to claim 3 or 4, in which the hydraulic braking subsystem (H) comprises a circuit in parallel.

6. Braking system for an automobile according to claim 1 or 2, in which said limitation means comprise an actuator formed by a solenoid powered by the generated current or an image of said generated current, and a mobile element in the solenoid, said mobile element being capable of applying an opposing force.

7. Braking system for an automobile according to claim 6, in which the actuator is of the piezoelectric type.

8. Braking system for an automobile according to claim 6, in which the actuator is of electric motor type coupled to a helical transmission.

9. Braking system for an automobile according to claim 1, in which the hydraulic braking subsystem (H) comprises a hydraulic pressure source, the limitation means (212) comprising a pressure limiter device inserted between the hydraulic pressure source and the brakes and capable of interrupting the fluid communication between said pressure source and the brakes, the cut-off pressure of the limiter device being fixed by an actuator controlled by the generated current or by an image of the generated current.

10. Braking system for an automobile according to the previous claim, in which the pressure limiter device (212) comprises a body (30) in which a piston (34) delimiting two chambers slides in a leak tight manner, one of the chambers being connected to said pressure source and the other chamber being connected to the brakes, the piston (34) comprising a passage in the piston and a valve (38), opening of the valve (38) being controlled by the position of the piston(34), the position of the piston (34) being controlled by the pressure difference between said two chambers, closing of the valve (38) causing the pressure limitation in the brakes, the position of the piston being controlled by the actuator (36).

11. Braking system for an automobile according to claim 9 or 10, in which the actuator (36) is a solenoid powered by the generated current or an image of said generated current, and a mobile element in the solenoid, the position of the mobile element defining the cut off pressure, or the actuator is of the piezoelectric type, or the actuator is of the electric motor type coupled to a helical transmission.

12. Braking system for an automobile according to one of claims 1 to 11, in which the pressure limitation means (12, 112, 212) are connected directly to the terminals of the electric machine.

13. Braking system for an automobile according to one of claims 1 to 11, comprising a toroidal current transformer (18) at the output from the electric machine, or a Hall effect sensor to which the pressure limitation means are connected (12, 112, 212).

14. Braking system for an automobile according to claim 1 or 2, in which the electric braking subsystem comprises at least one electric braking device at a wheel to actuate the brakes and in which said limitation means apply a force opposing the force applied by the electric braking device.

15. Braking system for an automobile according to claim 1 or 2, in which the electric braking subsystem comprises at least one electric braking device at a wheel to actuate the brakes and in which said limitation means comprise a coil in which the generated current or an image of the generated current circulates, creating a magnetic field opposing the field created by the braking device.

16. Braking system for an automobile according to claim 1 or 2, in which the electric braking subsystem comprises at least one electric braking device at each wheel to actuate the brakes and in which said limitation means comprise an electric circuit capable of subtracting the generated current or the image of said generated current from the control current of said electric braking device.

17. Braking system for an automobile according to one of claims 1 to 16, comprising a switch (21) in power supply circuit of the limitation means (12, 112, 212), said switch (21) being open when the driver does not give an order to brake and is closed when the driver gives the order to brake.

FIG. 1A

FIG. 1B

FIG. 1C

FIG. 1D

FIG. 2

FIG. 3

FIG. 4

## RÉFÉRENCES CITÉES DANS LA DESCRIPTION

**Documents brevets cités dans la description**

- US 20070126382 A

- WO 2008107212 A